# EUROPEAN PATENT SPECIFICATION

(11) **EP 2 109 029 B1**
(45) Date of publication and mention of the grant of the patent: **26.12.2012**
(21) Application number: 09009442.6
(22) Date of filing: 24.11.2003
(51) Int. Cl.: G06F 1/32

(54) **Apparatus and method for address bus power control**
Vorrichtung und Methode zur Steuerung der Adressbus-Spannungsversorgung
Appareil et procédé pour commander l'alimentation d'un bus d'adresse

(30) Priority: 11.12.2002 US 317798; 12.05.2003 US 436903
(43) Date of publication of application: 14.10.2009
(62) Divisional of application: 03790020.6
(73) Proprietor: Intel Corporation, Santa Clara, CA 95054 (US)
(72) Inventor: Kurts, Tsvika, Ahuzah 34752 Haifa (IL); Orenstien, Doron, 34752 Haifa (IL); Yuffe, Marcelo, 30500 Binyamina (IL)
(74) Representative: Goddar, Heinz J.

(56) References cited:
- US-A- 5 432 944
- US-A- 5 737 746
- US-A- 6 058 059
- US-A1- 2002 048 207
- US-B1- 6 339 552

## Description

### FIELD OF THE INVENTION

One or more embodiments of the invention relate generally to the field of integrated circuit and computer system design. More particularly, one or more of the embodiments of the invention relates to a method and apparatus for address bus power control.

### BACKGROUND OF THE INVENTION

Communications between devices within a computer system are typically performed using one or more buses that interconnect such devices. These buses may be dedicated buses coupling two devices or non-dedicated buses that are multiplexed by a number of units and devices (*e*.*g*., bus agents). Moreover, buses within a computer system may be dedicated to transferring a specific type of information. For example, the x86. microprocessor architecture developed by Intel Corporation of Santa Clara, California, includes a three bus system with address, data and control buses for respectively transferring address, data and control signals.

In computer systems employing advanced architectures and processors, such as Pentium®Pro, Pentium®II, Pentium®III or Pentium®4 processors, bus transactions typically occur in a pipelined manner. Specifically, the next memory access may start after a previous transaction request is issued; and all components or phases of a bus transaction are not required to complete before another bus transaction may be initiated. Accordingly, requests from numerous bus agents may be pending at any one time. The pipelining of bus transactions is facilitated by separate data and address buses. When an address of a request is being sent on an address bus, data (or signals) corresponding to an address previously issued on the address bus may be returned on the data bus.

A vast amount of research and system architecture design efforts have been directed to increasing data throughput within computer systems. Technologies such as, data pipelining, out-of-order execution, and the like, enable advanced architectures and processing with significantly higher clock rates and world-class performance.

Furthermore, this research, as well as architecture redesign, has enabled a mobile market for laptop computers, hand held devices, personal digital assistants (PDAs), and the like. Unfortunately, such mobile platforms may be limited to a run time dictated by the life of a battery used by the respective mobile platforms when another power source is not available. Depending on the complexity of the mobile platform, power resources from an attached battery may be depleted within a relatively short amount of time. In part, this is due to the fact that many electronic elements of the platform continue to consume power even when they are not being used.

Systems for reducing power consumption of bus sense amplifiers are disclosed in US2002/0048207, US-5737746 and US-6058059.

The present invention is defined by independent claims 1, 8 and 11.

### BRIEF DESCRIPTION OF THE DRAWINGS

The various embodiments of the present invention are illustrated by way of example, and not by way of limitation, in the figures of the accompanying drawings and in which:

**FIG.1** is a block diagram illustrating a prior processor and memory control hub.

**FIG. 2** is a block diagram illustrating a processor having an input buffer in accordance with one embodiment.

**FIG. 3** is a block diagram illustrating a single processor system platform in accordance with one embodiment.

**FIG. 4** illustrates a timing diagram in accordance with one embodiment.

**FIG. 5** illustrates a flow chart in accordance with one embodiment.

**FIG. 6** illustrates a flow chart in accordance with one embodiment.

**FIG. 7** illustrates a flow chart in accordance with one embodiment;

**FIG. 8** is a block diagram illustrating various design representations or formats for simulation, emulation and fabrication of a design using the disclosed techniques.

**FIG. 9** is a block diagram illustrating a single processor system platform in accordance with one embodiment.

**FIG. 10** is a block diagram illustrating a processor having an address input sense amplifiers in accordance with one embodiment.

**FIG. 11** illustrates a timing diagram that demonstrates a technique for enabling address sense amplifiers.

**FIG. 12** illustrates a processor having data sense amplifiers in accordance with one embodiment.

**FIG. 13** illustrates a timing diagram that demonstrates a technique for enabling data sense amplifiers.

**FIG. 14** illustrates a block diagram illustrating a multi-processor system platform in accordance with one embodiment.

**FIG. 15** illustrates a circuit that can be used to latch address values in a multi-processor environment.

**FIG. 16** illustrates a timing diagram that demonstrates a technique for enabling address sense amplifiers within a multi-processor environment

**FIG. 17** illustrates a circuit that can be used to latch both data and address values.

### DETAILED DESCRIPTION

In the following description, numerous specific details such as logic implementations, sizes and names of signals and buses, types and interrelationships of system components, and logic partitioning/integration choices are set forth in order to provide a more thorough understanding. It will be appreciated, however, by one skilled in the art that the invention may be practiced without such specific details. In other instances, control structures and gate level circuits have not been shown in detail in order not to obscure the invention. Those of ordinary skill in the art, with the included descriptions, will be able to implement appropriate logic circuits without undue experimentation.

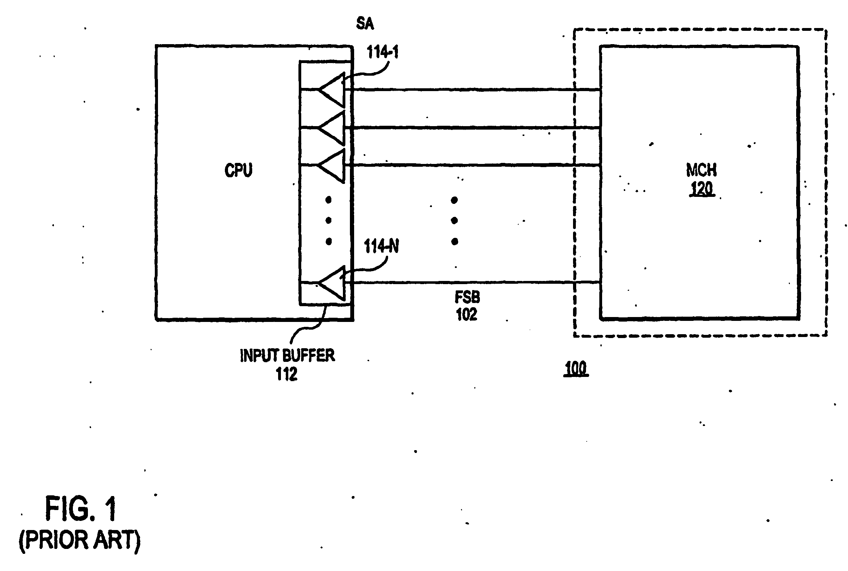

**FIG.1** is a diagram illustrating a prior processor (CPU) 110 and memory controller (MCH) arrangement for an exemplary computer system. As illustrated, CPU 110 may include input buffers 112 that operate to capture data received via data lines of a processor system bus or front-side bus (FSB) 102. The input buffers 112 of CPU 110 include a plurality of address bus input sense amplifiers 114 (114-1, ..., 114-N) that may be coupled to sense data transmitted to the CPU 110 via a data bus portion of the FSB 102.

For the CPU 110, the data bus input sense amplifiers 114 are continuously enabled following system initialization. While enabled, the data input sense amplifiers 114 consume power.

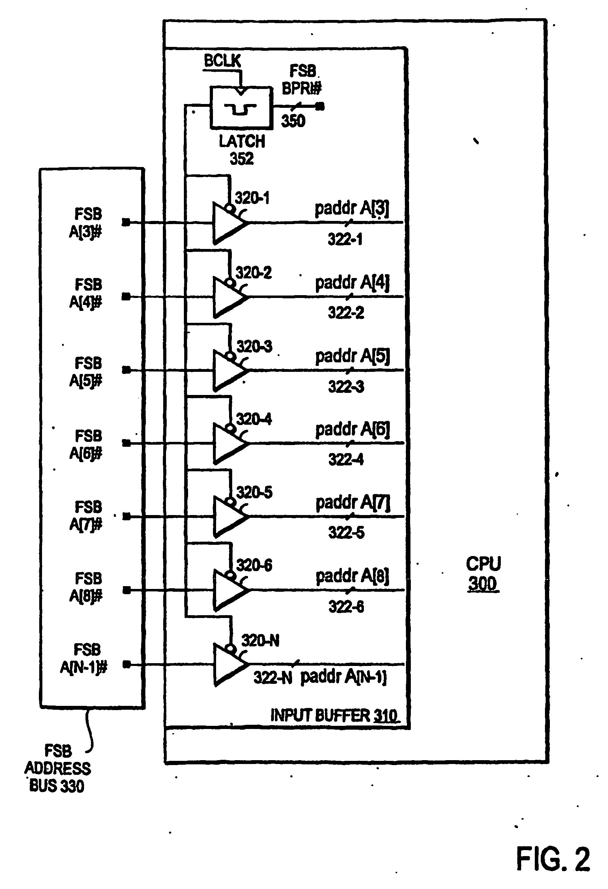

Referring now to **FIG. 2**, a processor (CPU) of one embodiment is described. For the embodiment shown in **FIG. 2**, the CPU 300 is a mobile platform CPU. It will be appreciated that, for other embodiments, the CPU 300 may be a different type of processor including, for example, a digital signal processor, a graphics processor, an embedded processor, etc.

As illustrated, CPU 300 includes input buffers that are shown collectively as input buffer 310. The input buffer 310 includes N address input sense amplifiers 320 (320-1, ..., 320-N). The sense amplifiers 320 have outputs coupled to internal address bus signal lines (paddr) 322 (322-1, ..., 322-N-1). Input buffer 310 may also be coupled to additional internal data and/or control lines. For one embodiment, the sense amplifiers 320 have inputs coupled to a plurality of address lines FSB A[O..N-1]# of a front-side bus (FSB) 330.

For one embodiment, the FSB 330 is compatible with the Pentium®4 processor front-side bus protocol, aspects of which are described in copending Singh et al., U.S. patent application no. US 2001/0037421 A1 published 11/01/2001. Where the FSB is compatible with the Pentium 4 processor front-side bus, the FSB 330 includes 64 data lines FSB D[0..63]. For other embodiments, it will be appreciated that the FSB 330 may be compatible with a different bus protocol and/or may include a different number of data lines.

With continuing reference to **FIG. 2****,** for one embodiment, the input buffer 310 further includes a latch 352 that is coupled to receive a bus clock (BCLK) signal and an address bus power control (BPRI#) signal 350 associated with FSB 330. For one embodiment, the BPRI# signal may be received from, for example, a chipset device (not shown) that is further coupled to CPU 300 over the FSB 330. An output of the latch 352 is coupled to enable inputs of each of the address input sense amplifiers 320.

In operation, as the BCLK signal transitions, the latch 352 latches the state of the BPRI# signal. In response to the BPRI# signal being asserted, the address input sense amplifiers 320 of input buffer 310 are enabled to capture an address from FSB 330 via address lines FSB A[0..N-1]#. Conversely, in response to the BPRI# signal being deasserted, the input address sense amplifiers are disabled. When the input sense amplifiers are disabled, their power dissipation, primarily thermal dissipation power (TDP) due to a bias current provided by the input buffer, is reduced.

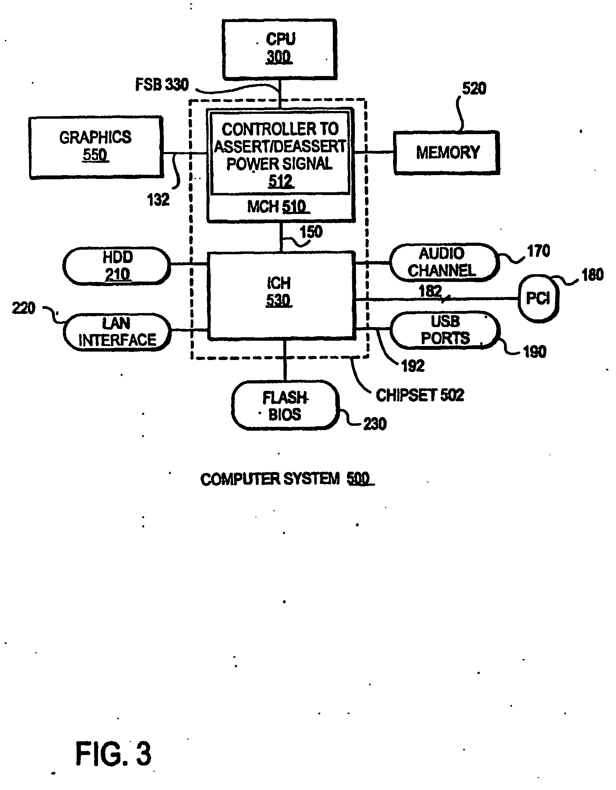

**FIG. 3** is a block diagram of computing system 500 of one embodiment in which the CPU 300 of **FIG. 2** may be advantageously used. In addition to the CPU 300, the system 500 includes a memory controller, referred to in one embodiment, as a memory control hub (MCH) 510, and an input/output (I/O) controller, referred to in one embodiment, as an I/O control hub (ICH) 530. Together, the MCH 510 and ICH 530 may be referred to as a chipset 502. The MCH 510 is coupled to the CPU 300 via the FSB 330 and to the ICH 530 via bus 150. Also coupled to the MCH 510 is main memory 520 and one or more graphics devices 550. The MCH may also have integrated graphic support (e.g., for use in mobile applications).

An I/O subsystem of the system 500 may include a variety of different types of input and/or output devices coupled to the ICH 530, such as a hard disk drive (HDD) 210, one or more USB ports 190 may be coupled to ICH 530 via a universal serial bus (USB) 192, and/or one or more peripheral component interconnect (PCI)- devices 180 may be coupled to the ICH via a corresponding bus 182. Additionally, for some embodiments one or more audio channels 170 and/or a local area network (LAN) interface 220 may also be coupled to ICH 530.

Implementations with various processors and front-side bus technologies are possible. In an embodiment where the FSB 330 is compatible with the P4 processor front-side bus, the FSB 330 is a pipelined data bus that includes address, data and control portions, which may alternately be referred to herein as address, data and control buses.

Devices coupled to the FSB 330 are also referred to herein as bus agents in reference to the FSB 330. For one embodiment, three types of agents may reside on FSB 330: request agents, response agents, and snoop agents. A request agent is a device that initiates a transaction by issuing a request such as, for example, a memory or I/O read or write request. A response agent is the target of the transaction such as, for example, an I/O target or a memory target. Snoop agents are devices on the bus typically associated with cache memories. For other embodiments, bus agents may be classified in a different manner.

Where the FSB 330 is a pipelined bus, bus transactions may be separated into phases and multiple transactions may overlap. Specifically, all components or phases of a bus transaction are not required to be completed before another bus transaction may be initiated.

As used herein, the term "transaction" designates a bus activity that is related to a single bus access request. A transaction may include several phases, each phase being associated with a specific set of bus signals to communicate a particular type of information. For one embodiment, exemplary phases may include, for example, an arbitration phase, a request phase, a snoop phase, a response phase and/or a data phase.

In the request phase, the requesting agent drives request control and address information on the FSB 330. During a subsequent snoop phase, it is determined, whether sought after data is stored locally and/or whether the transaction is likely to be completed in order with respect to previously issued transactions. In a response phase, a response agent reports to the requesting agent information indicating whether the requested transaction has succeeded or failed. If the requested transaction includes data transfer, a data phase, also referred to as a data transfer phase, may be initiated in response to the assertion of a data ready (DRDY#) signal.

As shown in **FIG. 3****,** in one embodiment, the BPRI# signal discussed above is to be asserted and deasserted by the MCH 510 as part of the FSB 330. In one embodiment, the MCH includes a controller 512 to cause assertion and deassertion of the BPRI# signal. In alternative embodiments, the controller 512 may be provided on other devices/agents coupled to the FSB 330. The manner in which the controller 512 is to cause assertion and deassertion of the BPRI# signal is discussed in more detail below.

In one embodiment, the controller 512 is to cause assertion and deassertion of the BPRI# signal such that the input address sense amplifiers 320 of the CPU 300 are disabled during times that there is no address activity on the FSB 330 and enabled prior to address transfer operations. For one embodiment, the controller is to apply the BPRI# signal in time for the processor to acquire the address information. Said another way, the controller 512 is to cause assertion of the BPRI# signal such that the sense amplifiers 320 of the CPU 300 are enabled in time to sense the address values provided on the FSB 330. Once the address values have been transferred across the FSB 330 to the processor, if there are no upcoming address value transfers within a predetermined timeframe (e.g. a given number of clock periods), the controller 512 is to cause deassertion of the BPRI# signal to reduce power consumption of the sense amplifiers

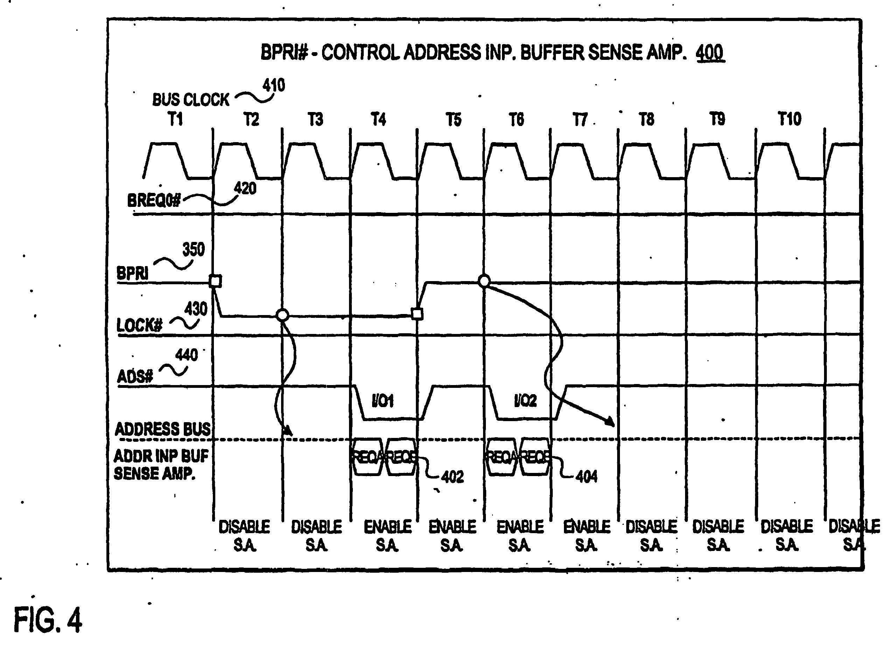

**FIG. 4** is a timing diagram illustrating the BPRI# signal for an embodiment that may be used within a computing system (e.g., as observed in Figure 3). The timing diagram of **FIG. 4** shows clock periods T1 - T10 of: 1) a bus clock (BCLK) signal 410 that was referred to above with respect to the discussion of FIG. 2; 2) a bus request signal BR[0]# signal 420 that is controlled by the computing system processor; 3) the BPRI# signal 350; 4) a LOCK# signal 430 for locking the bus; 5) an address strobe signal (ADS#) 440; and, 6) a representation of the address values that are presented on the address bus.

For the above signals, a "#" at the end of the signal name indicates that the associated signal is an active low signal (i.e. considered to be asserted when it is at a logic low level). It will be appreciated that active high signals may be used instead with corresponding changes in associated circuitry to provide similar functionality. Further, for one embodiment, one or more of the FSB 330 signals are low voltage swing signals that have a voltage swing smaller than full swing.

In the example transaction illustrated in **FIG. 4****,** the FSB is "quiet" at clock cycle T1 with respect to the transfer of address values and; as a consequence, the sense amplifiers of the processor are in a disabled, low power consumption state. A controller of the sending bus agent then begins a process for transferring address values to a receiving bus agent over the FSB by causing the assertion of the BPRI # signal 350 in T2. The process may be initiated, for example, if the sending bus agent recognizes that it needs to send a request to the receiving bus agent. Here, the request may be made (e.g., during a request phase of the bus protocol) by presenting address values on the address bus. In one embodiment, the sending bus agent is an MCH (e.g., MCH 512 of **FIG. 3**); and, the receiving bus agent is a processor (e.g., CPU 300 of **FIG. 3**). In this case, the MCH may be given a priority agent status so that the MCH can take control of the FSB if the MCH has a need to use the FSB.

In an embodiment, the sending agent (e.g., the MCH 512 of **FIG. 3**) includes a controller 512 that recognizes a transfer of address values is to be performed (e.g., by recognizing that a request should be sent over the bus); and, as a consequence causes the assertion of the BPRI# signal 350 sufficiently before the address values are to be received by the receiving agent (so that the sense amplifiers of the receiving agent are properly enabled to receive the address values). Here, the receiving bus agent detects the assertion of the BPRI# signal; and, in response, the sense amplifiers are enabled. As such, more generally, the controller is to cause the assertion of a power signal (e.g., the BPRI# signal of **FIG. 4**); which, in turn, causes the sense amplifiers of a receiving agent to become enabled.

In the embodiment of **FIG. 4****,** the receiving bus agent begins to enable its sense amplifiers on the next clock cycle following the clock cycle in which the BPRI# signal 350 was asserted. A full clock cycle is consumed (clock cycle T3) in order to ensure that the sense amplifiers will properly receive address values from the FSB. That is, according to the embodiment of **FIG. 4****,** the BPRI# signal 350 is latched by the receiving bus agent on the clock edge between clock cycles T2 and T3. In response to detection of the BPRI# signal by the receiving agent, the receiving agent enables the sense amplifiers. The sense amplifiers are then given the full, following clock cycle (clock cycle T3) to become sufficiently enabled to receive address values from the sending bus agent. Because of the transition from disabled to enabled that occurs in clock cycle T3, the sense amplifiers are regarded as "disabled" in clock cycle T3. At clock cycle T4 of the embodiment of **FIG. 4****,** the sending bus agent presents the address values of the FSB (as signified by "Req A" and "Req B" in **FIG. 4****)** with the assertion of the address strobe signal (ADS#) 440.

As a consequence, in the embodiment of **FIG. 4****,** the Req A and Req B address values are latched into the receiving bus agent through the sense amplifiers on appropriately positioned clock edges (e.g., the falling edge of bus clock 410 during clock cycle T4 to latch the Req A values; and, the rising edge of bus clock 410 between clock cycles T4 and T5 to latch the Req B values). The sending bus agent also de-asserts the address strobe 440 during clock cycle T5 so that an immediately following, transfer of address values ("Req A" and "Req B" during cycle T6) can be clearly delineated from the address value transfer that occurred during clock cycle T4. The address strobe 440 is then re-asserted during clock cycle T6 to effect the second address value transfer.

Note that, in the embodiment of **FIG. 4****,** the controller 512 of the sending agent causes the de-assertion of the BPRI# signal 350 with the re-assertion of the address strobe signal 440 during clock cycle T6. In an embodiment, the controller of the sending bus agent (e.g., the aforementioned controller such as the controller 512 of Figure 3) is designed to: 1) recognize that a "next" transfer of address values is not going to occur for at least some time period (e.g., a number of clock cycles beyond the "current" transfer of address values (the "current" transfer, at clock cycle T6, being the second transfer of Req A and Req B values)); and, 2) as a consequence, cause the de-assertion of the BPRI# signal 350 so as to disable the sense amplifiers shortly after the current address value transfer is received by the receiving bus agent. Here, again, in an embodiment the controller recognizes whether or not a "next" transfer address is to going to occur by monitoring whether or not a request needs to be made over the FSB. That is, requests are presented on the bus by placing address values of on the address bus portion of the FSB.

In the example of **FIG. 4****,** it is recognized as of clock cycle T6 that another transfer of address values does not follow the "T6" transfer for at least four clock cycles (because, as seen in **FIG. 4****,** no address value transfers occur between clock cycles T6 and T10); and, as a consequence, the controller 512 causes the de-assertion of the BPRI# signal to be de-asserted at clock cycle T6. It will be appreciated that, for other embodiments, a different number of clock periods or another measure of time between subsequent address transfers may be used to cause the de-assertion of the BPRI# signal 440.

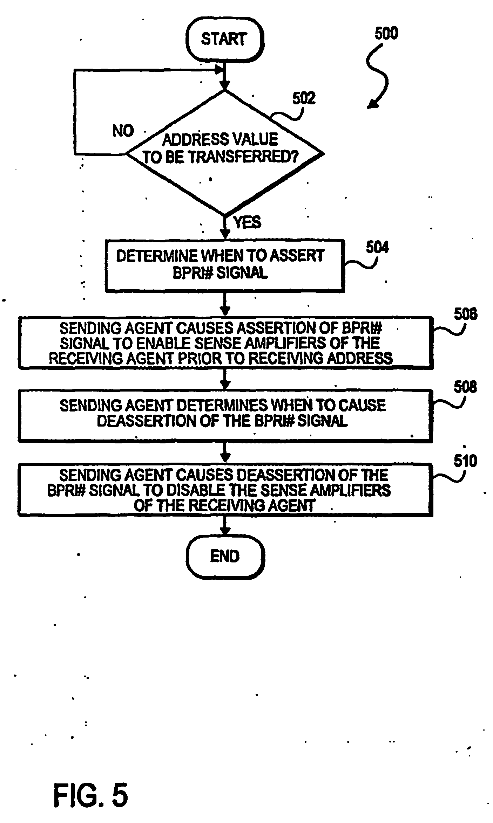

A method for address bus power control is described in the flow chart 500 illustrated in **FIG. 5****.** At process block 502, a sending agent (e.g., the MCH) detects an address is to be transferred to the receiving agent (e.g., processor). At process block 504, the sending agent determines when to assert the BPRI# signal. At process block 506, the sending agent causes assertion of the BPRI# signal to enable the sense amplifiers of the receiving agent to receive the address.

At process block 508 the sending agent determines when to cause the deassertion of the BPRI# signal, based on the completion of the address transfer to the receiving agent. At process block 510, the sending agent causes the deassertion of the BPRI# signal which causes the address input sense amplifiers of the receiving agent to be disabled.

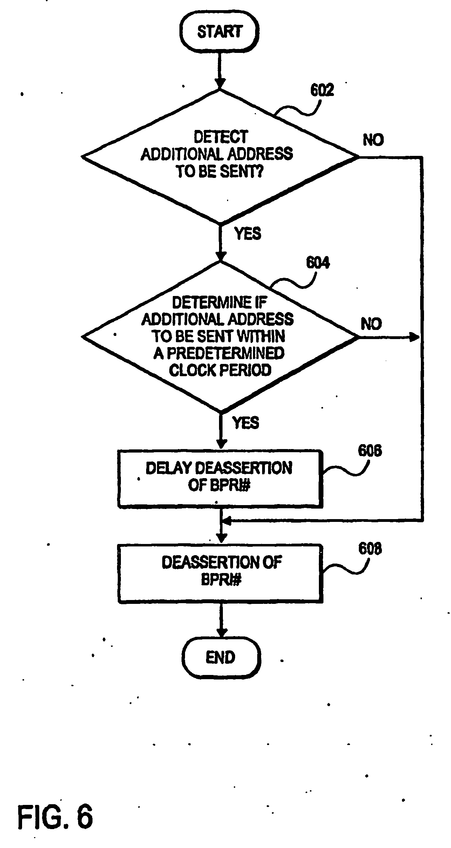

**FIG. 6** depicts a flow chart 600 illustrating an additional technique for causing the deassertion of the address bus power control signal BPRI#, in accordance with one embodiment. At process block 602 the sending agent determines whether an additional address (an additional address with respect to the current address being transferred to the receiving agent) will be sent to the receiving agent. If such an additional address is not detected, at process block 608 the address bus power control signal BPRI# is caused to be deasserted, following completion of the current address transfer, to disable the address input sense amplifiers of the receiving agent.

Conversely, if the sending agent detects an additional address is to be transferred to the receiving agent, in processing block 604 the sending agent determines if the additional address is to be sent to the receiving agent within a predetermined clock period. If the additional address is to be transferred beyond the predetermined clock period, at process block 608 the address bus power control signal BPRI# is caused to be deasserted, following completion of the current address transfer, to disable the address input sense amplifiers of the receiving agent.

If the additional address is to be transferred within the predetermined clock period, at process block 606 the sending agent delays deasserting the address bus power control signal BPRI#, to have the address input sense amplifiers continue to be enabled. At process block 608, the sending agent deasserts the BPRI # signal to disable the address sense amplifiers of the receving agent following completion of the additional address transfer, to disable the address input sense amplifiers of the receiving agent.

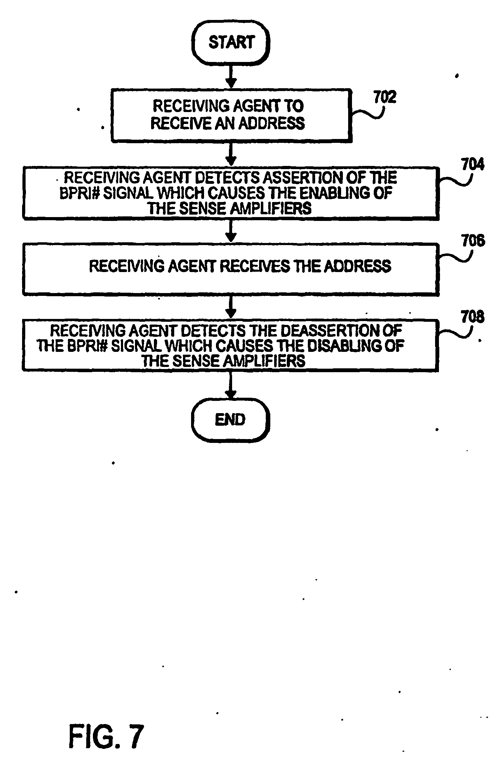

A method for data bus power control is described in the flow chart 700 illustrated in **FIG. 7**. In process block 702, the receiving agent (e.g., a CPU) is to receive an address from a separate agent. In process block 704, prior to receiving the address, the receiving agent detects assertion of the BPRI# signal, which causes the address input sense amplifiers of the receiving agent to be enabled to receive the address. In process block 706, the receiving agent receives the address. In process block 708, the receiving agent detects the deassertion of the BPRI# signal, which causes the disabling of the address input sense amplifiers of the receiving agent to reduce power consumption.

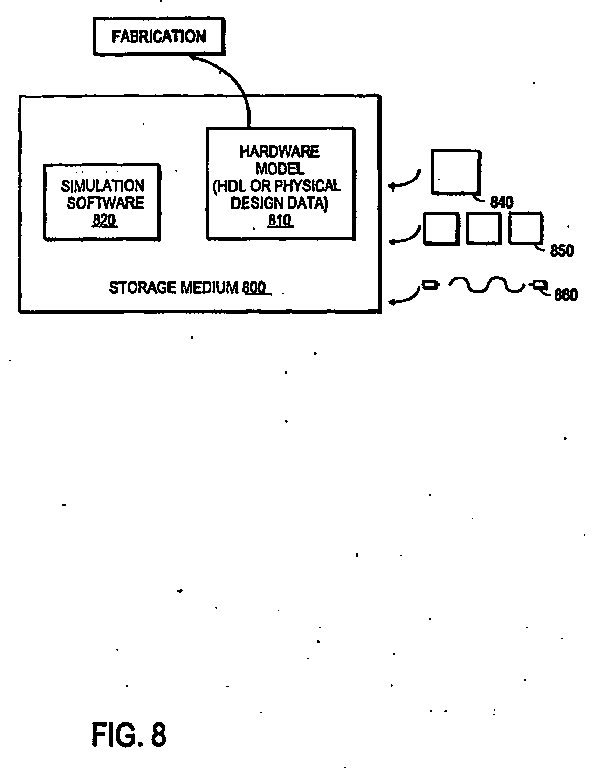

**FIG. 8** is a block diagram illustrating various design representations or formats for simulation, emulation and fabrication of a design using the disclosed techniques. Data representing a design may represent the design in a number of manners. First, as is useful in simulations, the hardware may be represented using a hardware description language, or another functional description language, which essentially provides a computerized model of how the designed hardware is expected to perform. The hardware model 810 may be stored in a storage medium 800, such as a computer memory, so that the model may be simulated using simulation software 820 that applies a particular test suite 830 to the hardware model to determine if it indeed functions as intended. In some embodiments, the simulation software is not recorded, captured or contained in the medium.

Additionally, a circuit level model with logic and/or transistor gates may be produced at some stages of the design process. The model may be similarly simulated some times by dedicated hardware simulators that form the model using programmable logic. This type of simulation taken a degree further may be an emulation technique. In any case, reconfigurable hardware is another embodiment that may involve a machine readable medium storing a model employing the disclosed techniques.

Furthermore, most designs at some stage reach a level of data representing the physical placements of various devices in the hardware model. In the case where conventional semiconductor fabrication techniques are used, the data representing the hardware model may be data specifying the presence or absence of various features on different mask layers or masks used to produce the integrated circuit. Again, this data representing the integrated circuit embodies the techniques disclosed in that the circuitry logic and the data can be simulated or fabricated to perform these techniques.

In any representation of the design, the data may be stored in any form of a machine readable medium. An optical or electrical wave 860 modulated or otherwise generated to transport such information, a memory 850 or a magnetic or optical storage 840, such as a disk, may be the machine readable medium. Any of these mediums may carry the design information. The term "carry" (*e*.*g*., a machine readable medium carrying information) thus covers information stored on a storage device or information encoded or modulated into or onto a carrier wave. The set of bits describing the design or a particular of the design are (when embodied in a machine readable medium, such as a carrier or storage medium) an article that may be sealed in and out of itself, or used by others for further design or fabrication.

### Alternate Embodiments

It will be appreciated that, for other embodiments, a different system configuration may be used. For example, while the system 500 includes a single CPU 300, for other embodiments, a multiprocessor system (where one or more processors may be similar in configuration and operation to the CPU 300 described above) may benefit from the address bus power control approach of various embodiments. Further different type of system or different type of computer system such as, for example, a server, a workstation, a desktop computer system, a gaming system, an embedded computer system, a blade server, etc., may be used for other embodiments.

Having disclosed exemplary embodiments, modifications and variations may be made to the disclosed embodiments while remaining within the scope of the embodiments of the invention as defined by the following claims.

### Downward Compatible Power Saving Bus Design

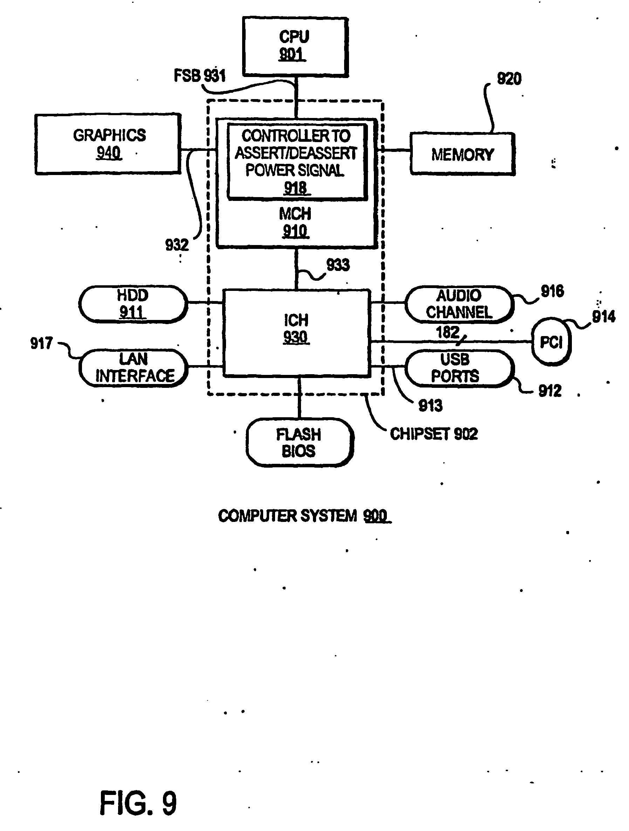

**FIG. 9** is a block diagram of an exemplary single processor computing system 900 in which a Central Processing Unit (CPU) 901 may be used. In addition to the CPU 901, the system 900 includes a memory controller, referred to in one embodiment, as a memory control hub (MCH) 910, and an input/output (I/O) controller, referred to in one embodiment, as an I/O control hub (ICH) 930. Together, when implemented as a plurality of semiconductor chips, the MCH 910 and ICH 930 may be referred to as a chipset 902. The MCH 910 is coupled to the CPU 901 via the front side bus (FSB) 931 and to the ICH 930 via bus 950. Also coupled to the MCH 910 is main memory 920 and one or more graphics devices 940.

An I/O subsystem of the computing system 900 may include a variety of different types of input and/or output devices coupled to the ICH 930, such as a hard disk drive (HDD) 911, one or more USB ported devices 912 may be coupled to ICH 930 via a universal serial bus (USB) 913, and/or one or more peripheral component interconnect (PCI)- devices 914 may be coupled to the ICH via a corresponding PCI bus 915. Additionally, for some embodiments one or more audio channels 916 and/or a local area network (LAN) interface 917 may also be coupled to ICH 930. Note that in at least one embodiment, the FSB 931 is compatible with a P4 processor front-side bus from Intel corporation.

Devices coupled to the FSB 931 are also referred to herein as bus agents in reference to the FSB 931. For one embodiment, three types of agents may reside on FSB 931: request agents, response agents, and snoop agents. A request agent is a device that initiates a transaction by issuing a request such as, for example, a memory or I/O read or write request. A response agent is the target of the transaction such as, for example, an I/O target or a memory target. Snoop agents are devices on the bus typically associated with cache memories. For other embodiments, bus agents may be classified in a different manner.

Where the FSB 931 is a pipelined bus, bus transactions may be separated into phases and multiple transactions may overlap. Specifically, all components or phases of a bus transaction are not required to be completed before another bus transaction may be initiated.

As used herein, the term "transaction" designates a bus activity that is related to a single bus access request. A transaction may include several phases, each phase being associated with a specific set of bus signals to communicate a particular type of information. For one embodiment, exemplary phases may include, for example, an arbitration phase, a request phase, an error phase, a snoop phase, a response phase and/or a data phase.

In the request phase, the requesting agent drives request control and address information on the FSB 931. During a subsequent snoop phase it is determined whether sought after data is stored locally and/or whether the transaction is likely to be completed in order with respect to previously issued transactions. In a response phase, a response agent reports to the requesting agent information indicating whether the requested transaction has succeeded or failed. If the requested transaction includes a data transfer, a data phase, also referred to as a data transfer phase, may be performed with the assertion of a data ready (DRDY#) signal.

As described in more detail below, a request signal may be asserted by the MCH 910 to use the FSB 931. Often, because of the importance that memory 920 has to the overall efficiency of the computing system as a whole, the MCH 910 is referred to as a "priority" agent upon the FSB 931. As such, in various embodiments, the aforementioned request signal that the MCH 910 asserts on the FSB 931 is referred to as a "Bus Priority agent Request Indication" (BPRI). When the MCH 910 desires to use the FSB 931, the MCH asserts the BPRI# signal; and, when the MCH 510 no longer desires to use the FSB 931, the MCH de-asserts the BPRI# signal (noting that the nomenclature # indicates an active low signal). The MCH includes a controller 918 (or control logic 918) to control the assertion and de-assertion of the BPRI# signal.

In one embodiment, the controller 918 causes assertion of the BPRI# signal such that sense amplifiers within the CPU 901 are enabled in time to sense the address values provided on the FSB 931 by the MCH 910. Once the address values have been transferred across the FSB 931 to the processor 901, if there are no upcoming address value transfers within a predetermined timeframe (e.g. a given number of clock periods), the controller 918 causes de-assertion of the BPRI# signal to reduce power consumption of the sense amplifiers.

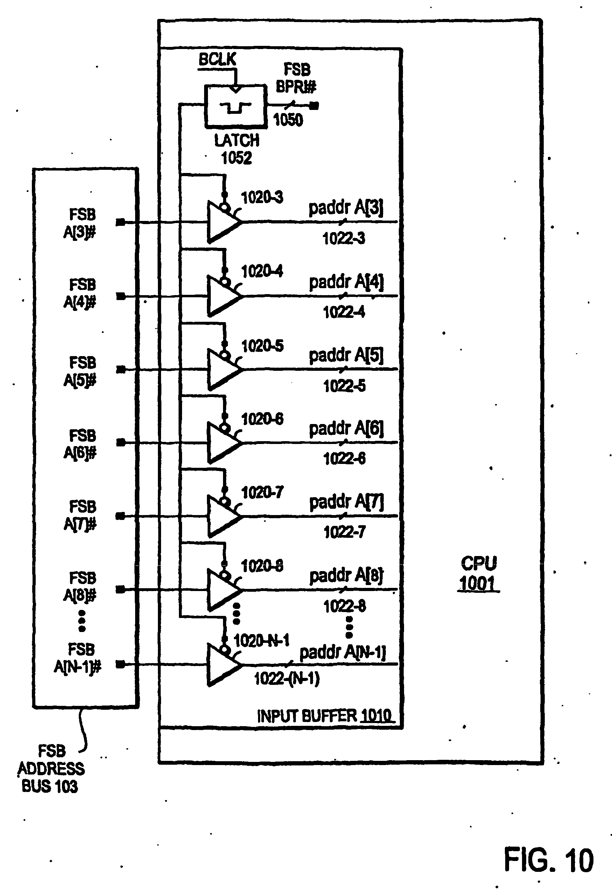

Referring now to **FIG. 10****,** a CPU 1001 is observed. CPU 1001 of Figure 10 may be viewed as corresponding to an embodiment of CPU 901 referred to just above with respect to **FIG. 9****.** As illustrated, CPU 1001 includes an input buffer that is shown collectively as input buffer 1010. The input buffer embodiment 1010 of **FIG. 10** includes (N-1)-3 address input sense amplifiers 1020 (1020-3, ..., 1020-(N-1)). The sense amplifiers 1020 have outputs coupled to internal address bus signal lines (paddr) 1022 (1022-3, ..., 1022-(N-1)). Input buffer 1010 may also be coupled to additional internal data and/or control lines. For one embodiment, the sense amplifiers 1020 have inputs coupled to a plurality of address lines FSB A[3..N-1]# that exist on the front-side bus (FSB) 1031. FSB address bus 1031 (hereinafter referred to as FSB 1031) of **FIG. 10** may be viewed, for as example, as corresponding to the address portion of FSB 931 of **FIG. 9****.**

At least for one embodiment, the FSB 1031 is compatible with an Intel Pentium® 4 processor (P4) front-side bus. For other embodiments, it will be appreciated that the FSB 1031 may be compatible with a different bus protocol. Note that the input buffer 1010 embodiment of **FIG. 10** includes a latch 1052 that is configured to receive a bus clock (BCLK) signal and the aforementioned BPRI# signal 1050 associated with FSB 1031. An output of the latch 1052 is coupled to enable inputs of each of the address input sense amplifiers 1020.

In operation, as the BCLK signal transitions, the latch 1052 latches the state of the BPRI# signal. In response to the BPRI# signal being asserted, the address input sense amplifiers 1020 of input buffer 1010 are enabled to capture an address from FSB 1031 via address lines FSB A[3..N-1]#. Conversely, in response to the BPRI# signal being deasserted, the input address sense amplifiers are disabled. When the input sense amplifiers are disabled, their power dissipation (e.g., thermal dissipation power (TDP) due to bias current(s)) is reduced.

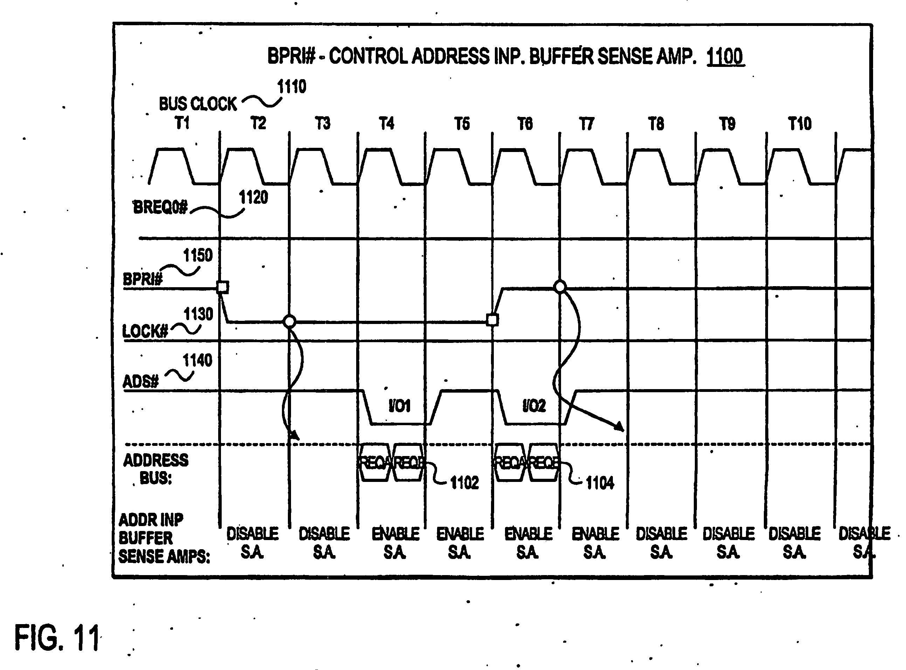

**FIG. 11** is a timing diagram illustrating the BPRI# signal for an embodiment that may be used within a single processor computing system (e.g., as observed in **FIG. 9**). The timing diagram of **FIG. 11** shows clock periods T1- T10 of: 1) a bus clock (BCLK) signal 1110 that was referred to above; 2) a BREQ0# signal 1120; 3) the BPRI# signal 1150 that was referred to above; 4) a LOCK# signal 1130; 5) an address strobe signal (ADS#) 1140; 6) a representation of the address values 1102, 1104 that are presented on the address bus; and, 7) the state of the input buffer sense amplifiers. For the above signals, a "#" at the end of the signal name indicates that the associated signal is an active low signal (i.e. considered to be asserted when it is at a logic low level). It will be appreciated that active high signals may be used instead with corresponding changes in associated circuitry to provide similar functionality

In the example transaction illustrated in **FIG.11****,** the FSB is initially "quiet" with respect to the transfer of address values and; as a consequence, the sense amplifiers of the processor are initially in a disabled, low power consumption state. A sending bus agent (e.g., such as a priority bus agent such as the MCH) then begins a process for transferring address values to a receiving bus agent (e.g., the processor/CPL) over the FSB by asserting the BPRI # signal 1150 in T2. In the embodiment of **FIG.11****,** the receiving bus agent (e.g., the CPU) has its sense amplifiers enabled to receive address values after the clock cycle following the clock cycle in which the BPRI# signal 350 was asserted. This is shown in **FIG.11** by the transition from "disabled" (in clock cycle T3) to "enabled" (in clock cycle T4).

That is, a full clock cycle is consumed (clock cycle T3) in order to ensure that the sense amplifiers will properly receive address values from the FSB during clock cycle T4. Accordng to at least one embodiment that may be represented by **FIG.11****,** the BPRI# signal 1150 is latched by the receiving bus agent input buffer on the clock edge between clock cycles T2 and T3 - after which the sense amplifiers begin to be enabled. The sense amplifiers are then given the full, following clock cycle (clock cycle T3) to become sufficiently enabled to receive address values from the sending bus agent. At clock cycle T4, the sending bus agent presents the address values of the FSB (as signified by "Req A" and "Req B" in **FIG.11**) and asserts the address strobe signal (ADS#) 1140.

As a consequence, the Req A and Req B address values may be latched into the receiving bus agent through the sense amplifiers on appropriately positioned clock edges (e.g., the rising edge of bus clock 1110 to latch the Req A values; and, the falling edge of bus clock 1110 to latch the Req B values). The sending bus agent also de-asserts the address strobe 1140 during clock cycle T5 so that an immediately following transfer of address values ("Req A" and "Req B" during cycle T6) can be clearly delineated from the address value transfer that occurred during clock cycle T4. The address strobe 1140 is then re-asserted during clock cycle T6 to effect the second address value transfer.

Note that, in the embodiment of **FIG.11****,** the sending agent also de-activates the BPRI# signal 1150 along with the re-assertion of the address strobe signal 1140 during clock cycle T6. In an embodiment, a form of intelligence at the sending bus agent (e.g., controller 918 of **FIG. 9**) is designed to: 1) recognize that a "next" transfer of address values is not going to occur for at least some number of clock cycles beyond the "current" transfer of address values (which, at clock cycle T6, is the second transfer of Req A and Req B values); and, 2) as a consequence, automatically de-assert the BPRI# signal 1150 so as to disable the sense amplifiers on the processor side shortly after the current address value transfer is received by the receiving bus agent.

In the example of **FIG.11****,** it is recognized that as long as BPRI# does not assert again, no further transaction can be issued to the FSB by the MCH. Thus the Input Buffer sense amplifiers can be kept disabled so as to reduce the processor's power consumption. In the example of **FIG 11****,** BPRI# is sampled as de-asserted at T7, thus no ADS# is issued to the bus between T7 to T10. It will be appreciated that, for other embodiments as appropriate, a different number of clock periods or another measure of time between subsequent address transfers may be used to cause the de-assertion of the BPRI# signal 1150.

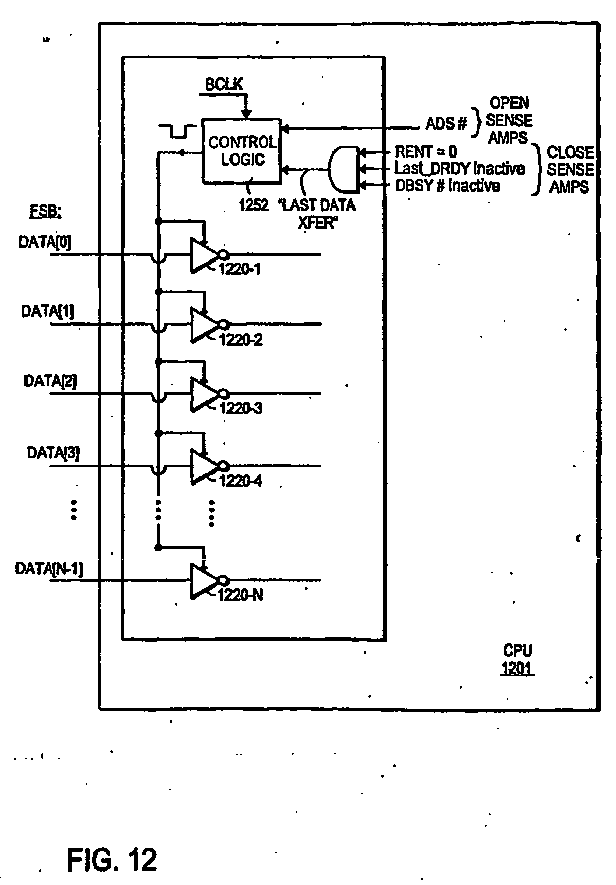

**FIG.s 10** and **11** related to a lower power bus transaction approach that triggers the enabling of *address* sense amplifiers based upon the status of a bus request signal on a front side bus. By contrast, **FIG.s 12** and **13** relate to a lower power bus transaction approach that triggers the enabling of *data* sense amplifiers on other front side bus signals (as will be described in more detail below). Similar to **FIG. 10****,** **FIG. 12** shows a CPU 1201 having a plurality of data sense amplifiers 1220-1 through 1220-N that are enabled by a control logic circuit 1252. The data sense amplifiers 1220-1 through 1220-N catch data presented on a data bus of the FSB during a data phase of an FSB transaction. The data sense amplifiers 1220-1 through 1220-N are disabled over periods of time in which there is no data to be received from the FSB; and, as a consequence, lower power consumption results. The reader will appreciate that the teachings of **FIGs 10** through **13** may be designed into a single processor.

Here, the control logic circuit 1252 enables and disables the data sense amplifiers 1220-1 through 1220-N in response to certain signals that are associated with the FSB in order to enable/disable the sense amplifiers 1220-1 through 1220-N as appropriate. In particular, in an embodiment, the control logic circuit 1252: 1) enables the data sense amplifiers 1220-1 through 1220-N in response to an address signal (e.g., ADS#) being asserted on the FSB; and, 2) disables the data sense amplifiers 1220-1 through 1220-N in response to: (i) a "last" data ready signal (e.g., Last DRDY) being de-asserted; (ii) an In-Order-Queue (IOQ) becoming empty (e.g., which is signified by an RCNT parameter being set equal to 0); and, (iii) a data busy signal (DBSY#) being de-asserted. Here, the processor 1201 can be readily designed to track the state of the bus so that the above described conditions can be easily identified. For example, the "Last_DRDY") signal can be readily designed as a processor internal control signal (as opposed to a front side bus control signal).

Tthe activation of the ADS# signal indicates that valid data may soon be presented on the data bus (e.g., in a data phase of the transaction to which the ADS# assertion played a role; and/or, a subsequent transaction's data phase). Hence, the sense amplifiers 1220-1 through 1220-N should be enabled to receive such valid data should it be presented. The de-assertion of the Last DRDY and DBSY# signals together with the IOQ being empty indicates that valid data is not expected on the data bus for a significant following time period. As a consequence the sense amplifiers 1220-1 through 1220-N are disabled to as to conserve power.

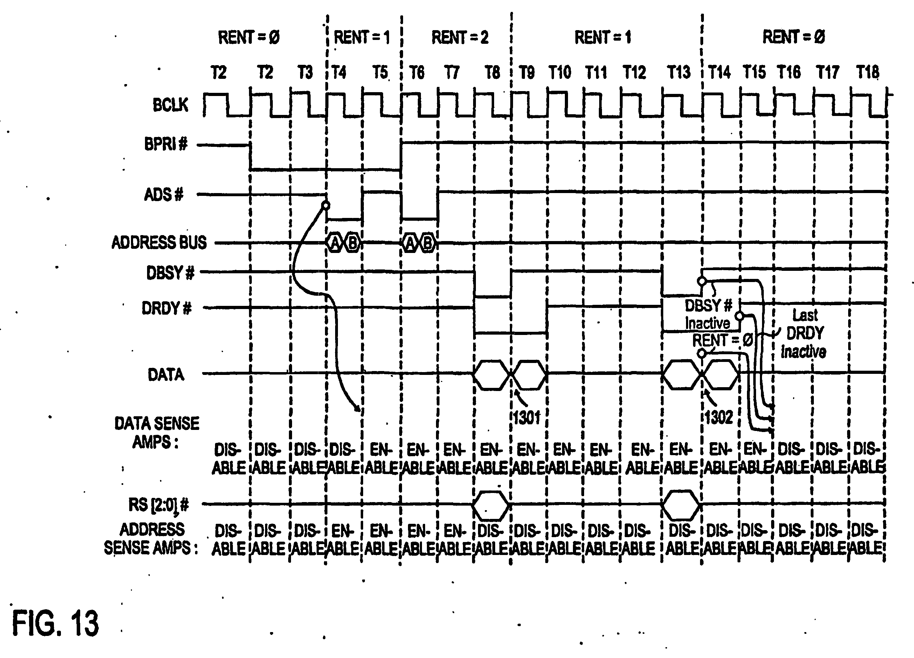

Here, note that the IOQ is recognized as queuing valid data response for transactions in the order in which the transactions were presented on the front side bus. Therefore, valid data can be expected to appear on the front side bus in the near term so long as the IOQ is non empty. Hence, according to the approach of **FIGs. 12** and **13****,** the data sense amplifiers remain enabled so long as the IOQ is non empty. In P4 compatible applications, an "RCNT" parameter is used to track the data phases yet to be performed. Thus, the IOQ is recognized as being non being empty if the RCNT parameter is not set equal to zero; and, the IOQ is recognized as being empty if the RCNT parameter is set equal to zero.

**FIG. 13** shows an exemplary depiction of the enable/disable scheme for the data sense amplifiers as described just above. According to the depiction of **FIG. 6****,** a pair of bus transactions are observed. A first bus transaction involves: 1) an asserted ADS# signal at cycle T4 (which corresponds to the request phase of the first bus transaction); 2) an asserted DRDY# signal and corresponding data transfer 1301 over cycles T8 and T9 (which corresponds to the data phase of the first bus transaction). A second bus transaction involves: 1) an asserted ADS# signal at cycle T6 (which corresponds to the request phase of the second bus transaction); 2) an asserted DRDY# signal and corresponding data transfer 1302 over cycles T13 and T14 (which corresponds to the data phase of the second bus transaction).

The data sense amplifiers are disabled from cycles T1 through T3 (noting that the RCNT parameter = "0" over cycles T1 through T3). The ADS# signal is asserted for the first bus transaction between cycles T3 and T4 which, by providing a full following clock cycle (T4) to allow the data sense amplifiers to become fully enabled, corresponds to the data sense amplifiers being considered as enabled at the start of clock cycle T5. Note that the assertion of the ADS# signal between cycles T3 and T4 causes the RCNT parameter to increment from "0" to "1" (i.e., the IOQ is recognized as transitioning from empty to non-empty between cycles T3 and T4). Once the data sense amplifiers are enabled, they are not disabled until the IOQ is empty (i.e., RCNT = 0) and the DRDY# and DBSY# signals indicate that the data bus is non active.

Because the ADS# assertion for the second bus transaction (over cycle T6) occurs before the completion of the data phase for the first bus transaction (cycle T9), the RCNT value is incremented to a value of "2" from cycle T6 through cycle T8; and then, is decremented back to a value of RCNT = 1 upon the response for the transaction being presented on the bus (e.g., as indicated by RS[2:0]# being active at cycle T8). Thus, RCNT = 1 starting from cycle T9 indicates that the data phase for the first bus transaction is being completed; but, the data phase for the second bus transaction has not yet been completed. According to the exemplary depiction of **FIG.13****,** the data phase for the second bus transaction is not completed until cycle T14; and, as no further bus transactions have arisen to follow the second bus transaction (as represented by the ADS# signal remaining inactive from cycle T6 throughout the remainder of **FIG. 13**), so as to increment RUNT - the RCNT parameter is decremented from "1" to "0" as a consequence of the data phase for the second transaction being completed.

Therefore the condition for disabling the data sense amplifiers arises in light of the data phase for the second transaction being completed (as indicated by the DBSY# signal going inactive at cycle T14 and the DRDY# going inactive at cycle T15) and the corresponding decrement of the RCNT parameter to "0" (starting from cycle T14). Giving the data sense amplifiers a full clock cycle to be regarded as disabled from the time DRDY# becomes inactive, the data sense amplifiers are regarded as disabled starting at cycle T16. In practice, an intermediate signal Last_DRDY (which, again, may be implemented as an internal control signal within the processor) may be used to indicate the "last" data transfer in a string of proximate data transfers. For example, the Last DRDY signal may be active when the "last" data transfer in a string of proximate data transfers is presented on the bus. De-activation of the Last DRDY signal is therefore an indication that the data sense amplifiers can be turned off.

The discussion concerning **FIGs. 10** through **13** may be used to implement a single processor computing environment (e.g., as depicted in **FIG. 9**); where, **FIGs 10** and **11** related to a low power consumption scheme for *address* sense amplifiers; and, **FIGs 12** and **13** related to low power consumption scheme for *data* sense amplifiers. Moreover, note that, at least with respect to existing P4 compatible implementations, these low power schemes may be implemented without the addition of an additional signal to the front side bus. That is, the low power schemes taught herein can be used without the addition of any "new" signals to the front side bus and therefore are pin-for-pin compatible with pre-existing front side bus implementations.

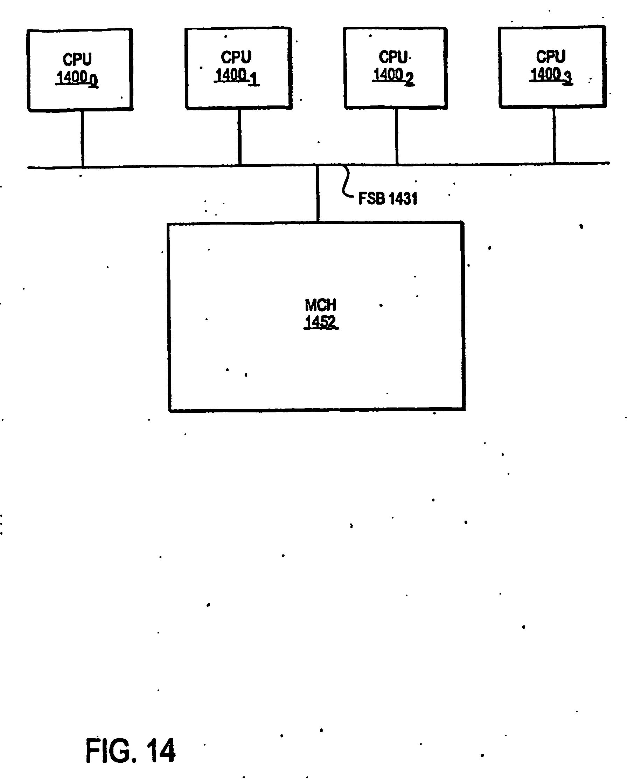

In contrast to the single processor embodiment referred to above with respect to **FIGs 10** through **13****,** by contrast, **FIG. 14** illustrates an embodiment of a portion of a "multi-processor" computing system. Here, the MCH 1452 and a plurality of processors 1400₀ through 1400₃ share the FSB 1431. In a multi-processor environment, each of MCH 1452 and processors 1400₀ through 1400₃ may request a bus transaction (e.g., by having a functional dependency on another bus agent). Nevertheless, the same *data* sense amplifier scheme (and its corresponding alternative implementations) discussed above with respect to **FIGs 12** and **13****,** may be used in a multi-processor environment. That is, even in a multi-processor environment, data sense amplifiers may be transitioned from disabled to enabled upon the first asserted ADS# signal that is recognized while the data sense amplifiers are within a disabled state; and, moreover, the data sense amplifiers may be configured to remain enabled until the IOQ is empty and the data bus is idled.

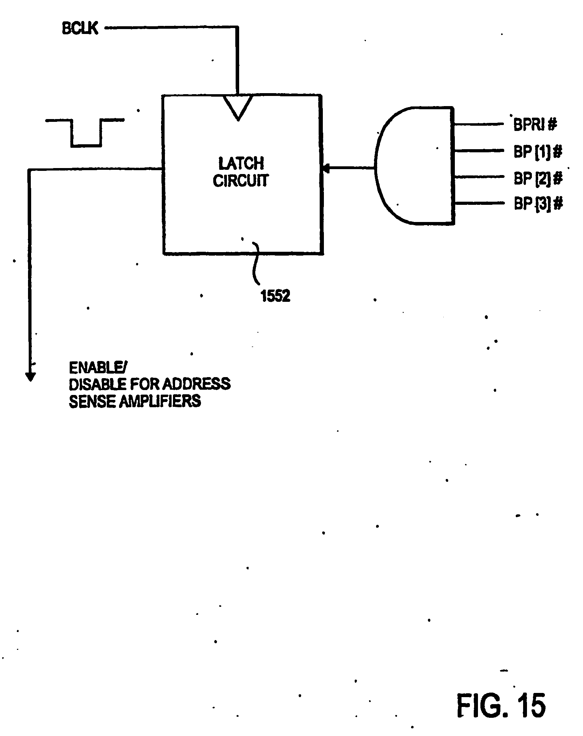

However, with respect to the addressing component of the single processor implementation (e.g., as represented in **FIGs 10** and **11**), a modification should be made in order to implement a low power multi-processor scheme. **FIG. 15** shows a suitable modification that may be made to the latch circuit 1052 of **FIG. 10****.** In particular, whereas the latch circuit 1052 of **FIG.10** accepts a single input (BPRI#) from the sole bus priority agent that the processor 1001 interfaces with in a single processor environment (e.g., the MCH 910 of **FIG. 9**); by contrast, the latch circuit 1552 of **FIG.15** may be triggered to latch the enable/disable line for the sense amplifiers (so as to enable the sense amplifiers) in response to the initiation of a bus transaction from *any* of the bus agents in the multi-processor environment. Here, as an example, latch circuit 1552 of **FIG. 15** can viewed as being integrated into a first processor (e.g., processor "0" in a four processor system); and, as consequence, the latch circuit 1552 is responsive to bus transaction starts that are initiated by the "other" bus agents that the first processor shares the front side bus with (e.g., referring to **FIG.14****,** from the MCH 1452 as represented by BPRI#; and the "other" three processors 1400₁ through 1400₃ as represented by BR[1]# through BR[3]#, respectively).

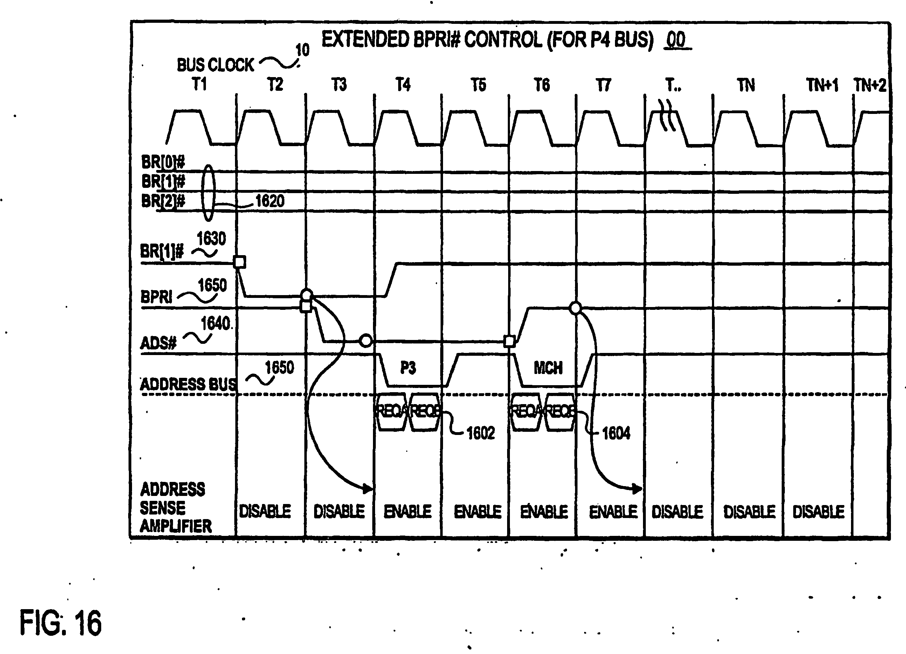

According to the circuit of **FIG.15****,** if any of the "other" bus agents request a bus transaction, the latch circuit 1552 within "processor 0" will put the sense amplifiers into an enabled state so that "processor 0" may receive the address from whichever bus agent is initiating the bus transaction. Moreover, the latch circuit 1552 will put the sense amplifiers into a disabled state whenever none of the bus agents are initiating a bus transaction. **FIG.16** shows an example. **FIG.16** refers to an exemplary "four processor" multi-processor environment. **FIG. 16** demonstrates the operation of a first of these processors (e.g., "processor_0" from amongst processors 0 through 3). According to **FIG. 16****,** processors 0, 1 and 2 never initiate a bus transaction; hence, their corresponding request signals (BR[0]#, BR[1]# and BR[2]#) are inactive by remaining in a logic high state 1620 throughout **FIG.16****.**

By contrast, both the fourth processor and the MCH initiate a bus transaction in the timeframe that **FIG.16** illustrates. In particular, the fourth processor initiates a first bus transaction by asserting its BR[3]# output 1630 at cycle T2. The MCH, being aware that the fourth processor ("processor 3") will own the bus for the next request phase (by asserting the ADS# line 1640 at cycle T4), waits for a following request phase (and asserts the ADS# line 1640 at later cycle T6). In various embodiments the processors in a multi-processor environment should be configured within a "non-bus parking" mode. Non bus parking mode is a form of cooperation or politeness within a multiprocessor environment in which a processor is preventing from "hogging" the front side bus. More specifically, a processor/MCH will deactivate its "BR[x]"/"BPRI" signal after each assertion of its "BR[x]"/"BPRI" signal so that another bus agent can use the bus for a transaction after the processor's transaction (even if the processor has another event that requires use of the front side bus). The embodiment of such a scheme is depicted in **FIG.16** because "processor 3" inactivates the BR[3]# line 1630 upon its corresponding request phase (via assertion of the ADS# signal 1640 at cycle T4); and, the MCH inactivates the BPRI# line 1650 upon its corresponding request phase (via assertion of the ADS# signal 1640 at cycle T6).

Under the non bus sparking mode embodiment of **FIG.16****,** note that the first phase of a bus transaction (i.e. the arbitration phase) starts on the assertion of a BPRI# or BR[x]# line; and, the second phase of a bus transaction (i.e., the request phase) starts on the assertion of a BPRI# or BR[x]# line. If a BPRI# or BR[x]# signal remains asserted until its corresponding transaction enters the request phase; and if, valid address values appear for the clock cycle within which a BPRI# or BR[x]# line is de-asserted; then, proper enabling of the address sense amplifiers can be achieved by: 1) enabling the address sense amplifiers in response to an assertion of any of the BPRI# or BR[x]# lines; and, 2) disabling the address sense amplifiers whenever the de-assertion of a BPRI# or BR[x]# line results in a state where none of the BPRI# or BR[x]# lines are asserted. Note that **FIG 16** shows such a scheme because the address sense amplifiers are enabled in response to the earlier assertion of the BR[3]# line 1630 (between cycles T1 and T2); and, are disabled in response to the later de-assertion of the BPRI# line 1630 (within cycle T6).

Giving the sense amplifiers sufficient time to change their enable/disable state ounce the latch circuit 1552 latches on a BCLK rising edge results in the sense amplifiers being enabled only over clock cycles T4 through T7. This time period is sufficiently long to capture the valid address values that are presented at cycles T4 and T6; yet, reduces power consumption by disabling the address sense amplifiers over cycles T1 through T2 and from cycle T8 fore ward (where cycles T3 and T7 are regarded as transition cycles over which the state of the address sense amplifiers changes from disabled to enabled and enabled to disabled, respectively). In an embodiment, so as to allow the sense amplifiers an appropriate amount of time to change state, at least two clock cycles are consumed between the assertion a BR[x]# or BPRI[x]# signal and the assertion of the corresponding ADS# signal. For example, as observed in **FIG. 16****,** the assertion of the BR[3]# signal 1630 at the beginning of the cycle T2 results in the assertion of its corresponding ADS# 1640 at the beginning of cycle T4; and, the assertion of the BPRI# signal 1650 at the beginning of cycle T3 results in the assertion of its corresponding ADS# 1640 at the beginning of cycle T6. In a further embodiment, the "default" P4 bus is used to ensure the "at least two clock cycle" policy described just above.

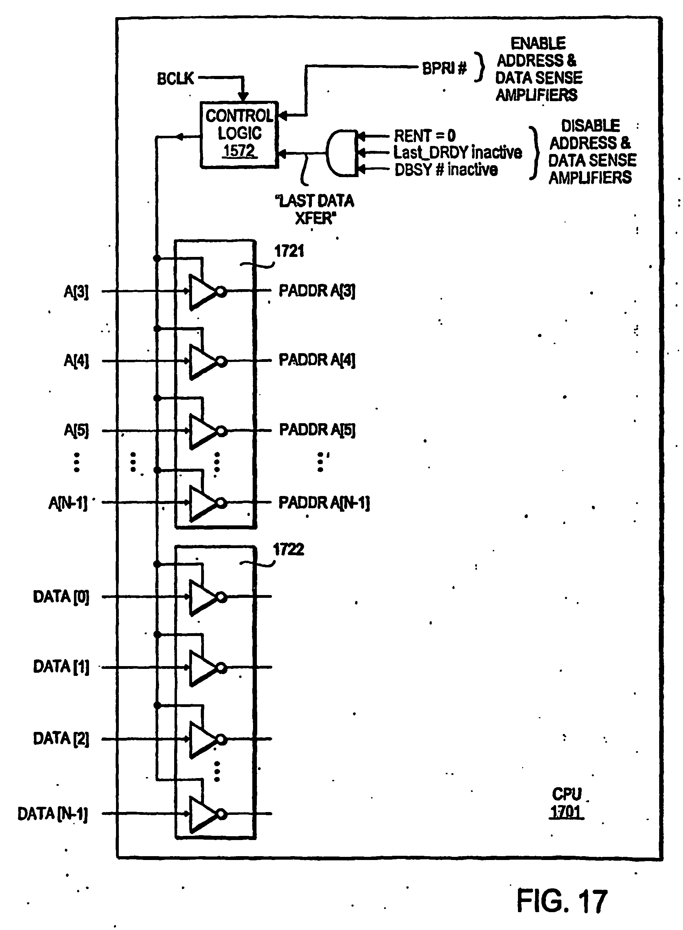

**FIG. 17** shows another embodiment of a circuit that can be viewed as a combination of the circuits observed in **FIG.s 10** and **12****.** The circuit of **FIG.17** enables and disables the address sense amplifiers 1721 together with the enabling and disabling of the data sense amplifiers 1722. Hence, a single control logic circuit 1752 is used to control both the address sense amplifiers 1721 and the data sense amplifiers 1722. In order to ensure proper operation, both the address and the data sense amplifiers 1721, 1722 are enabled with the activation of the BPRI# signal (to ensure early enough enabling of the address sense amplifiers 1721 as observed in **FIG. 11** with respect to the circuit of **FIG. 10**); and, both the address and data sense amplifiers 1721,1722 are disabled with RCNT = 0, Last_DRDY going inactive and DBSY# being inactive (to ensure late enough disabling of the data sense amplifiers as observed in **FIG. 13** with respect to the circuit of **FIG. 12**). Although the circuit of **FIG. 17** can be used in a uni-processor environment, the circuitry of **FIG. 17** can be expanded to be compatible within a multi-processor environment by re-configuring the input to the control logic 1752 that triggers the enabling of the sense amplifiers to be as shown in **FIG. 15****.**

The reader will appreciate that, as discussed with respect to **FIG. 8****,** various design representations or formats for simulation, emulation and fabrication of a design may be implemented for the teachings of **FIG.s 9** through **17**.

Having disclosed exemplary embodiments, modifications and variations may be made to the disclosed embodiments while remaining within the scope of the embodiments of the invention as defined by the following claims.

The invention may also relate to one of the following examples:
1. In a processor having data sense amplifiers that receive data from a data bus portion of a front side bus, a method comprising:
   enabling said data sense amplifiers in response to an address strobe being asserted; and,
   disabling said data sense amplifiers at least in response to a queue being empty, said queue to keep track of transactions yet to be performed over said front side bus.
2. In a processor having data sense amplifiers that receive data from a data bus portion of a front side bus and address sense amplifiers that receive an address from an address bus portion of said front side bus, a method comprising:
   enabling said address sense amplifiers in response to a request indication being asserted;
   enabling said data sense amplifiers in response to an address strobe being asserted;
   disabling said address sense amplifiers in response to said request indication being de-asserted; and,
   disabling said data sense amplifiers at least in response to a queue being empty, said queue to keep track of transactions yet to be performed over said data bus.
3. In a processor that is part of a multi-processor computing system having a plurality of processors and a memory controller, said plurality of processors and said memory controller coupled together through a front side bus, said processor comprising address sense amplifiers that receive an address from an address bus portion of said front side bus:
   enabling said address sense amplifiers in response to a first request indication being asserted from another of said processors; and,
   keeping said address sense amplifiers enabled after said first request indication is de-asserted because a second request indication is asserted from said memory controller before said first request indication was de-asserted.
4. A bus agent comprising:
   a controller to cause assertion of a power signal if an address is to be transferred to a receiving bus agent, the power signal to enable a set of input address sense amplifiers of the receiving agent, prior to the receiving bus agent receiving the address.
5. The bus agent of example 4, wherein the controller is also to cause the de-assertion of the power signal to disable the sense amplifiers after the address has been received.
6. The bus agent of example 4, wherein the controller is also to cause the de-assertion of the power signal to disable the sense amplifiers after the address has been received if no additional address value is scheduled to be sent within a predetermined clock period.
7. The bus agent of example 4, wherein the bus agent is a chipset.
8. The bus agent of example 4, wherein the bus agent is a memory controller.
9. The bus agent of example 4, wherein the receiving bus agent is a processor.
10. A bus agent comprising:
   an interface to a bus, the interface to cause assertion of a power signal if the bus agent is to place an address on the bus, the power signal to allow a set of input address sense amplifiers of a receiving agent to receive the address.
11. The bus agent of example 10, wherein the interface is also to cause the de-assertion of the power signal to disable the sense amplifiers after the address has been received.
12. The bus agent of example 10, wherein the interface is also to cause the de-assertion of the power signal to disable the sense amplifiers after the address has been received if no additional address is scheduled to be sent within a predetermined clock period.
13. The bus agent of example 10 wherein the predetermined number of clock periods is at least 2 clock periods.
14. The bus agent of example 10, wherein the bus agent is a chip set.
15. The bus agent of example 10, wherein the bus agent is a memory controller.
16. The bus agent of example 10, wherein the receiving agent is a processor.
17. A bus agent comprising:
   an input buffer having a set of input address sense amplifiers; and
   the sense amplifiers are coupled to a address bus power control signal, the sense amplifiers are caused to be enabled to receive an address from an external bus agent in response to assertion of the power control signal, prior to the agent receiving an address.
18. The bus agent of example 17, wherein the input address sense amplifiers are caused to be disabled after the bus agent has received the address in response to de-assertion of the power control signal.
19. The bus agent of example 17, wherein the bus agent is a processor.
20. The bus agent of example 17, wherein the external bus agent is a chipset.
21. The bus agent of example 17, wherein the external bus agent is a memory controller.
22. The bus agent of example 17, wherein the sense amplifiers are caused to be enabled to receive an address from the external bus agent in response to assertion of the power control signal at least two clock periods prior to the bus agent receiving the address.
23. A method comprising:
   recognizing that an address is to be transferred over a bus; and
   asserting a power signal to enable a set of input address sense amplifiers of a receiving agent, prior to the receiving agent receiving the address.
24. The method of example 23, further comprising de-asserting the power signal to disable the set of input address sense amplifiers after completion of the address transfer.
25. The method of example 23, further comprising de-asserting the power signal to disable the set of input address sense amplifiers after completion of an address transfer if no address is scheduled to be sent to the receiving agent within a predetermined clock period.
26. The method of example 23, wherein the asserting the power signal includes asserting the power signal at least two clock periods prior to the address delivery period.
27. The method of example 23, wherein the method is performed by a chipset.
28. The method of example 23, wherein the method is performed by a memory controller.
29. The method of example 23, wherein the receiving agent is a processor.
30. An article comprising a machine readable carrier medium carrying data which, when loaded into a computer system memory in conjunction with simulation routines, provides functionality of a model comprising:
   a controller to cause assertion of a power signal if an address is to be transferred to a receiving bus agent, the power signal to enable a set of input address sense amplifiers of the receiving agent, prior to the receiving bus agent receiving the address.
31. The article of example 30, wherein the controller is also to cause the de-assertion of the power signal to disable the sense amplifiers after the address has been received.
32. The article of example 30, wherein the controller is also to cause the de-assertion of the power signal to disable the sense amplifiers after the address has been received if no additional address value is scheduled to be sent within a predetermined clock period.
33. The article of example 30, wherein the bus agent is a chipset.
34. The article of example 30, wherein the bus agent is a memory controller.
35. The bus agent of example 4, wherein the receiving bus agent is a processor.
36. A system comprising:
   a chipset comprising:
      a controller to cause assertion of a power signal if an address is to be transferred to a receiving bus agent; and
      a processor comprising:
         an input buffer having a set of input address sense amplifiers, the sense amplifiers are coupled to the address bus power control signal, the sense amplifiers are caused to be enabled to receive an address from the chipset in response to assertion of the power signal, prior to the processor receiving the address.
37. The system of example 36, wherein the controller of the chipset is to cause de- assertion of the power signal to disable the set of input address sense amplifiers after completion of an address transfer.
38. The system of example 36, wherein the controller of the chipset is to cause de- assertion of the power signal to disable the set of input address sense amplifiers after completion of the address transfer and if no address is scheduled to be sent to the requesting agent within a predetermined clock period.

## Claims

1. A bus agent comprising:
an input buffer (310) having a set of input address sense amplifiers (320); and
the sense amplifiers (320) are coupled to an address bus power control signal (350), the sense amplifiers (320) are caused to be enabled to receive an address from an external bus agent in response to assertion of the power control signal (350), prior to the bus agent receiving an address,
**characterized in that**
the assertion is caused by a controller (512, 918) of the external bus agent (510), wherein the controller (512, 918) is further to cause de-assertion of the power control signal (350) to disable the sense amplifiers (320) once the address has been received at the bus agent.

2. The bus agent of claim 1, wherein the input address sense amplifiers (320) are caused to be disabled after the bus agent has received the address in response to de-assertion of the power control signal (350).

3. The bus agent of claim 1, wherein the bus agent is a processor.

4. The bus agent of claim 1, wherein the external bus agent is a chipset (502, 902).

5. The bus agent of claim 1, wherein the external bus agent is a memory controller (512, 918).

6. The bus agent of claim 1, wherein the sense amplifiers (320) are caused to be enabled to receive an address from the external bus agent in response to assertion of the power control signal (350) at least two clock periods prior to the bus agent receiving the address.

7. The bus agent of one of the previous claims, wherein the receiving bus agent is a processor.

8. A system comprising:
a bus agent;
a chipset (502, 902) coupled to the bus agent, the chipset comprising:
a controller (512, 918) being adapted to cause assertion of an address bus power control signal (350) if an address is to be transferred to a processor (300, 901) and to cause de-assertion of the power control signal (350) to disable a set of input address sense amplifiers (320) after completion of an address transfer; and
the processor (300, 901) coupled to the controller (512, 918), the processor (300, 901) having an input buffer having the set of input address sense amplifiers (320), the sense amplifiers (320) are coupled to the power control signal (350), the sense amplifiers (320) are cause to be enabled to receive an address from the chipset (502, 902) in response to assertion of the power control signal (350), prior to the processor (300, 901) receiving the address.

9. The system of claim 8, wherein the controller (512, 918) of the chipset (502, 902) is to cause de-assertion of the power signal to disable the sense amplifiers (320) after completion of the address transfer if no address is scheduled to be sent within a predetermined clock period.

10. The system of claim 9 wherein the predetermined number of clock periods is at least 2 clock periods.

11. A method comprising:
recognizing, by a controller (512, 918) of an external bus agent (510), that an address is to be transferred over a bus;
asserting a power control signal (350) by said controller to enable input address sense amplifiers (320) of a receiving bus agent on the bus, prior to the receiving bus agent receiving the address in response to an address strobe being asserted; and,
de-asserting the power control signal (350) by said controller to disable the sense amplifiers (320) of said receiving bus agent after completion of the address transfer and at least in response to a queue being empty, said queue to keep track of transactions yet to be performed over the bus.

12. The method of claim 11, wherein asserting the power control signal (350) comprises asserting the power control signal (350) at least two clock periods prior to an address delivery period.

13. The method of claim 11, wherein the method is performed by a chipset (502, 902).

14. The method of claim 11, wherein the method is performed by a memory controller (512,918).

15. The method of claim 11, wherein the receiving bus agent comprises a processor (300, 901).

16. A machine readable carrier medium carrying data which, when loaded into a computer system memory in conjunction with simulation routines, provides functionality of the method according to one of the claims 12 to 15.

## Patentansprüche

1. Bus-Agent mit:
einem Eingangspuffer (310) mit einem Satz von Adresseingaben-Leseverstärkern (320); wobei
die Leseverstärker (320) an ein Adressbus-Leistungssteuersignal (350) koppeln, und wobei die Leseverstärker (320) angesteuert werden, um eine Adresse von einem externen Bus-Agenten in Antwort auf eine Aktivierung durch das Leistungssteuersignal (350) zu erhalten, und zwar bevor der Bus-Agent eine Adresse erhält,
**dadurch gekennzeichnet, dass**
die Aktivierung durch einen Kontroller (512, 918) des externen Bus-Agenten (510) bewirkt wird, wobei der Kontroller (512, 918) außerdem ausgebildet ist, um eine Deaktivierung des Leistungssteuersignals (350) zu bewirken, um so den Leseverstärker (320) zu deaktivieren, wenn die Adresse durch den Bus-Agenten erhalten wurde.

2. Bus-Agent nach Anspruch 1, wobei der Adresseingaben-Leseverstärker (320) ausgebildet ist, in Antwort auf die Deaktivierung des Leistungssteuersignals (320) deaktiviert zu werden, nachdem der Bus-Agent die Adresse erhalten hat.

3. Bus-Agent nach Anspruch 1, wobei der Bus-Agent ein Prozessor ist.

4. Bus-Agent nach Anspruch 1, wobei der externe Bus-Agent ein Chipsatz (502, 902) ist.

5. Bus-Agent nach Anspruch 1, wobei der externe Bus-Agent ein Speicherkontroller (512, 918) ist.

6. Bus-Agent nach Anspruch 1, wobei die Leseverstärker (320) angesteuert werden, um den Erhalt einer Adresse von dem externen Bus-Agenten in Antwort auf die Aktivierung des Leistungssteuersignals (350), zumindest zwei Zeittakte bevor der Bus-Agent die Adresse erhalten hat, zu ermöglichen.

7. Bus-Agent nach einem der vorhergehenden Ansprüche, wobei der empfangende Bus-Agent ein Prozessor ist.

8. System mit:
einem Bus-Agenten;
einem Chipsatz (502, 902), der an dem Bus-Agenten koppelt, wobei der Chipsatz Folgendes umfasst:
einen Kontroller (512, 918), der ausgebildet ist, um eine Aktivierung eines Adressbus-Leistungssteuersignals (350) zu bewirken, wenn eine Adresse zu einem Prozessor (300, 901) zu übertragen ist, und um ein Deaktivierung eines Leistungssteuersignals (350) zu bewirken, um einen Satz von Eingangsadressen-Leseverstärkern (320) nach Fertigstellung der Adressübertragung auszuschalten; und
wobei der Prozessor (300, 901) an den Kontroller (512, 918) koppelt, wobei der Prozessor (300, 901) einen Eingangspuffer aufweist, der einen Satz von Eingabeadressen-Leseverstärkem (320) hat, wobei die Leseverstärker (320) an das Leistungssteuersignal (350) koppeln, wobei die Leseverstärker (320) in der Lage sind, eine Adresse von dem Chipsatz (502, 902) in Antwort auf eine Aktivierung durch das Leistungssteuersignal (350) zu erhalten, und zwar bevor der Prozessor (300, 901) die Adresse empfängt.

9. System nach Anspruch 8, wobei der Kontroller (512, 918) des Chipsatzes (502, 902) eine Deaktivierung des Leistungssignals bewirkt, um die Leseverstärker (320) nach dem Abschluss der Adressübertragung auszuschalten, wenn keine Adresse innerhalb einer vorbestimmten Taktperiode zur Übertragung vorgesehen ist.

10. System nach Anspruch 9, wobei die vorbestimmte Anzahl von Taktperioden zumindest zwei Taktperioden sind.

11. Verfahren mit:
Erkennen durch einen Kontroller (512, 918) eines externen Bus-Agenten (510), ob eine Adresse über einen Bus zu übertragen ist;
Aktivieren eines Leistungssteuersignal (350) durch den Kontroller, um Eingabeadress-Leseverstärker (320) eines empfangenden Bus-Agenten auf dem Bus zu aktivieren, und zwar bevor der empfangende Bus-Agent die Adresse in Antwort auf ein Aktivieren eines Adresstaktimpulses erhält; und
Deaktivieren des Leistungssteuersignals (350) durch den Kontroller, um die Leseverstärker (320) des empfangenden Bus-Agenten nach vollständiger Adressübertragung auszuschalten, und um zumindest in Antwort auf eine leere Warteschlange, die Warteschlange über Transaktionen, die über den Bus noch auszuführen sind, auf dem Laufenden zu halten.

12. Verfahren nach Anspruch 11, wobei das Aktivieren des Leistungssteuersignals (350) ein Aktivieren des Leistungssteuersignals (350) zumindest zwei Zeittakte vor der Adressübertragungsperiode umfasst.

13. Verfahren nach Anspruch 11, wobei das Verfahren durch einen Chipsatz (502, 902) ausgeführt wird.

14. Verfahren nach Anspruch 11, wobei das Verfahren durch einen Speicherkontroller (512, 918) ausgeführt wird.

15. Verfahren nach Anspruch 11, wobei der empfangende Bus-Agent einen Prozessor (300, 901) umfasst.

16. Maschinenlesbares Speichermedium, welches Daten umfasst, die, wenn sie in einen Computersystemspeicher im Zusammenhang mit Simulationsroutinen geladen werden, die Funktionalität des Verfahrens nach einem der Ansprüche 12 bis 15 bereitstellt.

## Revendications

1. Agent de bus comprenant :
une mémoire tampon d'entrée (310) présentant un ensemble d'amplificateurs de détection d'adresses d'entrée (320) ; et
dans lequel les amplificateurs de détection (320) sont couplés à un signal de commande d'alimentation de bus d'adresses (350), les amplificateurs de détection (320) sont amenés à être activés de manière à recevoir une adresse en provenance d'un agent de bus externe,
en réponse à une assertion du signal de commande d'alimentation (350), avant que l'agent de bus ne reçoive une adresse ;
**caractérisé en ce que** :
l'assertion est occasionnée par un contrôleur (512, 918) de l'agent de bus externe (510), dans lequel le contrôleur (512, 918) est en outre amené à occasionner l'infirmation du signal de commande d'alimentation (350) en vue de désactiver les amplificateurs de détection (320) dès lors que l'adresse a été reçue au niveau de l'agent de bus.

2. Agent de bus selon la revendication 1, dans lequel les amplificateurs de détection d'adresses d'entrée (320) sont amenés à être désactivés après que l'agent de bus a reçu l'adresse en réponse à l'infirmation du signal de commande d'alimentation (350).

3. Agent de bus selon la revendication 1, dans lequel l'agent de bus est un processeur.

4. Agent de bus selon la revendication 1, dans lequel l'agent de bus externe est un jeu de puces (502, 902).

5. Agent de bus selon la revendication 1, dans lequel l'agent de bus externe est un contrôleur de mémoire (512, 918).

6. Agent de bus selon la revendication 1, dans lequel les amplificateurs de détection (320) sont amenés à être activés en vue de recevoir une adresse en provenance de l'agent de bus externe en réponse à l'assertion du signal de commande d'alimentation (350) au moins deux périodes d'horloge avant que l'agent de bus ne reçoive l'adresse.

7. Agent de bus selon l'une des revendications précédentes, dans lequel l'agent de bus récepteur est un processeur.

8. Système comprenant :
un agent de bus ;
un jeu de puces (502, 902) couplé à l'agent de bus, le jeu de puces comprenant :
un contrôleur (512, 918) apte à occasionner l'assertion d'un signal de commande d'alimentation de bus d'adresses (350) si une adresse doit être transférée à un processeur (300, 901), et à occasionner l'infirmation du signal de commande d'alimentation (350) en vue de désactiver un ensemble d'amplificateurs de détection d'adresses d'entrée (320) à l'issue d'un transfert d'adresse ; et
dans lequel le processeur (300, 901) est couplé au contrôleur (512, 918), le processeur (300, 901) présentant une mémoire tampon d'entrée ayant l'ensemble d'amplificateurs de détection d'adresses d'entrée (320), les amplificateurs de détection (320) sont couplés au signal de commande d'alimentation (350), les amplificateurs de détection (320) sont amenés à être activés en vue de recevoir une adresse en provenance du jeu de puces (502, 902) en réponse à l'assertion du signal de commande d'alimentation (350), avant que le processeur (300, 901) ne reçoive l'adresse.

9. Système selon la revendication 8, dans lequel le contrôleur (512, 918) du jeu de puces (502, 902) est amené à occasionner l'assertion du signal d'alimentation en vue de désactiver les amplificateurs de détection (320) à l'issue du transfert d'adresse si aucun envoi d'adresse n'est planifié au cours d'une période d'horloge prédéterminée.

10. Système selon la revendication 9, dans lequel le nombre prédéterminé de périodes d'horloge est d'au moins 2 périodes d'horloge.

11. Procédé comprenant :
la reconnaissance, par un contrôleur (512, 918) d'un agent de bus externe (510), qu'une adresse doit être transférée sur un bus ;
l'assertion d'un signal de commande d'alimentation (350), par ledit contrôleur, afin d'activer des amplificateurs de détection d'adresses d'entrée (320) d'un agent de bus récepteur sur le bus, avant que l'agent de bus ne reçoive l'adresse en réponse à un
signal d'échantillonnage d'adresse assertée ; et
l'infirmation du signal de commande d'alimentation (350), par ledit contrôleur, en vue de désactiver les amplificateurs de détection (320) dudit agent de bus récepteur à l'issue du transfert d'adresse, et au moins en réponse à une file d'attente vide, ladite file d'attente étant destinée à suivre les transactions qui sont encore à réaliser sur le bus.

12. Procédé selon la revendication 11, dans lequel l'assertion du signal de commande d'alimentation (350) comprend l'assertion du signal de commande d'alimentation (350) au moins deux périodes d'horloge avant une période de distribution d'adresses.

13. Procédé selon la revendication 11, dans lequel le procédé est mis en oeuvre par un jeu de puces (502, 902).

14. Procédé selon la revendication 11, dans lequel le procédé est mis en oeuvre par un contrôleur de mémoire (512, 918).

15. Procédé selon la revendication 11, dans lequel l'agent de bus récepteur comprend un processeur (300, 901).

16. Support lisible par machine portant des données qui, lorsqu'il est chargé dans une mémoire de système informatique conjointement avec des routines de simulation, fournit la fonctionnalité du procédé selon l'une quelconque des revendications 12 à 15.
